Europäisches Patentamt

European Patent Office

Office européen des brevets

(19)

(11) Numéro de publication : **0 321 317 B1**

(12) ## FASCICULE DE BREVET EUROPEEN

(45) Date de publication du fascicule du brevet :
**11.03.92 Bulletin 92/11**

(51) Int. Cl.$^5$ : **B23K 9/02**

(21) Numéro de dépôt : **88402534.7**

(22) Date de dépôt : **06.10.88**

(54) **Dispositif de soudage de l'extrémité d'une pièce tubulaire fixée à l'intérieur d'un alésage débouchant sur une face d'une plaque telle qu'une plaque tubulaire de générateur de vapeur.**

(30) Priorité : **13.11.87 FR 8715731**

(43) Date de publication de la demande :
**21.06.89 Bulletin 89/25**

(45) Mention de la délivrance du brevet :
**11.03.92 Bulletin 92/11**

(84) Etats contractants désignés :
**BE CH DE ES GB LI SE**

(56) Documents cités :
**DE-C- 1 006 698**
**US-A- 4 262 187**
**US-A- 4 427 868**

(73) Titulaire : **FRAMATOME**
**Tour Fiat 1, Place de la Coupole**
**F-92400 Courbevoie (FR)**

(72) Inventeur : **Gaudin, Jean-Paul**
**3, Rue Jacques Brel**
**F-69680 Chassieu (FR)**
Inventeur : **Peyrot, Jean-Pierre**
**8 Domaine de Bel Abord**
**F-91380 Chilly-Mazarin (FR)**

(74) Mandataire : **Bouget, Lucien et al**
**Cabinet Lavoix 2, Place d'Estienne d'Orves**
**F-75441 Paris Cédex 09 (FR)**

## Description

L'invention concerne un dispositif de soudage d'une partie d'extrémité de forme circulaire, d'une pièce tubulaire fixée à l'intérieur d'un alésage débouchant sur une face d'une plaque telle qu'une plaque tubulaire de générateur de vapeur percée d'un ensemble de trous de passage de tube.

Les générateurs de vapeur des réacteurs nucléaires à eau sous pression comportent une plaque tubulaire de forte épaisseur, cette épaisseur étant généralement supérieure à 500 mm, percée de plusieurs milliers de trous dans chacun desquels est fixée une extrémité d'un tube du générateur de vapeur. Chacun des trous traversant la plaque tubulaire débouche à l'une de ses extrémités sur la face d'entrée de la plaque tubulaire, à l'intérieur de la boîte à eau du générateur de vapeur.

Dans le générateur de vapeur en service, les tubes subissent une corrosion qui est généralement plus accentuée dans la zone de tubes voisine de la face de sortie de la plaque tubulaire. Il peut être nécessaire, pour effectuer l'étude des zones du tube ayant subi la corrosion et pour évaluer l'état d'avancement de cette corrosion, d'extraire la partie du tube située à l'intérieur de la plaque tubulaire et une partie plus ou moins longue du tube située au-delà de la face de sortie, suivant la localisation des zones ayant subi la corrosion maximale et suivant la nature des contrôles à effectuer sur les tubes.

Lorsqu'on a réalisé l'extraction d'un ou plusieurs tubes, il est nécessaire d'assurer le bouchage du trou traversant la plaque tubulaire, au niveau de chacun des tubes extraits, avant d'effectuer la remise en service du générateur de vapeur. On réalise donc, pour chacun des tubes extraits, la mise en place d'une chemise dans le trou de passage du tube et la fixation de cette chemise dans le tube, par exemple par dudgeonnage. On vient ensuite fixer à l'intérieur de la chemise, du côté de la face d'entrée de la plaque tubulaire, un bouchon constitué par une pièce tubulaire ayant un fond fermé. Le bouchon, qui présente un diamètre inférieur au diamètre intérieur de la chemise après sa mise en place dans la plaque tubulaire, subit une expansion diamétrale assurant son maintien à l'intérieur de la chemise. Pour terminer le bouchage du trou de passage de la plaque tubulaire, on réalise le soudage de l'extrémité du bouchon sur l'extrémité de la chemise, ces deux extrémités étant pratiquement en coïncidence et situées à une distance faible de la face d'entrée de la plaque tubulaire.

Le bouchon mis en place dans la chemise peut être un bouchon mécanique classique. Dans ce cas, on ne réalise que la soudure de la chemise sur la plaque tubulaire.

Le soudage des extrémités du bouchon et/ou de la chemise, de forme circulaire nécessite l'utilisation d'un dispositif de soudage rotatif ou orbital. Il est nécessaire de pouvoir réaliser une commande à distance des opérations de soudage, compte tenu du fait qu'on opère à l'intérieur de la boîte à eau des générateurs de vapeur qui est une zone irradiée dans laquelle toute intervention humaine doit être évitée ou réduite le plus possible quant à sa durée.

On connaît par le US-A-4.262.187 une tête de soudage de type T.I.G. automatique qui peut permettre de réaliser une opération de soudage de l'extrémité d'une pièce tubulaire située à l'intérieur d'une chemise ou d'un tube. Cette tête de soudage comporte une douille de centrage et une électrode de soudage montée rotative autour de l'axe de la douille.

La douille de centrage est engagée dans la pièce tubulaire, de façon que l'axe de la douille et l'axe de la pièce tubulaire soient confondus. L'électrode de soudage est placée au voisinage de l'extrémité de la pièce tubulaire et sa mise en rotation autour de l'axe de la douille permet de réaliser le soudage de l'extrémité de la pièce tubulaire.

Cependant, pour obtenir une soudure uniforme, étanche et de très bonne qualité, il est nécessaire que l'extrémité de l'électrode se déplace dans un plan parfaitement parallèle au plan de l'extrémité circulaire de la pièce tubulaire et à une distance faible et parfaitement constante de cette extrémité de la pièce tubulaire constituant le chanfrein de soudage.

Il est donc nécessaire d'assurer à distance et de manière automatique, une très bonne mise en place et une très bonne fixation de la machine de soudage, par rapport de la pièce tubulaire à souder.

On connaît des dispositifs porteurs déplaçables à l'intérieur de la boîte à eau d'un générateur de vapeur de façon à venir à la verticale de chacune des ouvertures d'entrée des tubes du générateur de vapeur, pour présenter successivement un outillage au niveau de ces ouvertures. Un tel dispositif porteur ne permet pas cependant d'assurer une mise en place rapide et une fixation parfaite d'une tête de soudage au niveau d'une pièce tubulaire à souder à intérieur d'un trou de passage de tubes de la plaque tubulaire.

On connaît également un moyen de fixation d'un outillage sur la face d'entrée d'une plaque tubulaire comportant une partie cylindrique constituée à la manière d'un mandrin par plusieurs secteurs déformables permettant une dilatation diamétrale assurant la fixation de la partie cylindrique dans le tube. Les secteurs déformables peuvent être mis en position rétractée par action d'un vérin, ce qui permet l'introduction de la partie cylindrique dans un tube. Lorsqu'on relâche la pression du vérin, les secteurs déformables reviennent en position dilatée et assurent ainsi la fixation du dispositif dans le tube.

Cependant, dans le cas où on recherche une mise en position parfaite d'un outillage par rapport à l'extrémité d'une pièce tubulaire fixée à l'intérieur d'un passage de tube de la plaque tubulaire, un tel dispositif de fixation à l'intérieur d'un tube voisin du passage de tube dont on réalise le bouchage peut être inopérant, les axes des tubes ou des trous de passage traversant la plaque tubulaire n'étant pas parfaitement parallèles.

En effet, la direction des trous de passage n'est pas toujours parfaitement perpendiculaire à la face d'entrée de la plaque tubulaire et cette plaque tubulaire subit pendant les épreuves hydrauliques du générateur de vapeur et pendant le fonctionnement de ce générateur de vapeur, des déformations qui se traduisent par de légères inclinaisons relatives des alésages successifs traversant la plaque.

En outre, la distance entre les passages de tubes qui est parfaitement définie et parfaitement constante au niveau de la face d'entrée de la plaque tubulaire subit des variations à l'intérieur de cette plaque tubulaire dues à l'inclinaison relative des axes des trous de passage.

Un tel dispositif ne permet pas de réaliser un positionnement précis de la tête de soudage.

On connaît par le DE-C-1.006.698, un dispositif de soudage de l'extrémité circulaire d'un tube fixé dans une plaque tubulaire qui comporte un support pour une tête de soudage dont l'inclinaison par rapport à la direction axiale du tube peut être réglée pour assurer le réglage de position de l'électrode. Le support de la tête de soudage est fixé sur la plaque tubulaire par des dispositifs de fixation engagés dans des tubes voisins du tube à souder.

On connaît enfin, par le US-A-4.427.686, un dispositif de soudage de l'extrémité d'un tube fixé dans une plaque tubulaire qui comporte deux pions de fixation dans des tubes voisins du tube à souder sur lesquels est montée avec une certaine latitude de déplacement, une plaque solidaire du support de la tête de soudage. Un pion d'indexage solidaire d'un support monté pivotant sur la plaque permet de placer la plaque et le support de la tête de soudage dans la position voulue pour le soudage du tube avant de réaliser le serrage des pions de fixation. Le dispositif est complexe et nécessite une opération préalable d'indexage. En outre, la tête de soudage n'est pas parfaitement centrée par rapport au tube pendant le soudage, par un élément de maintien tel qu'une douille.

Le but de l'invention est donc de proposer un dispositif de soudage d'une partie d'extrémité de forme circulaire, d'une pièce tubulaire fixée à l'intérieur d'un alésage débouchant sur une face d'une plaque, telle qu'une plaque tubulaire de générateur de vapeur, percée d'un ensemble de trous de passage de tubes disposés suivant un réseau régulier comportant un moyen de fixation présentant une partie cylindrique destinée à être introduite dans un tube du réseau et un vérin d'actionnement de la partie cylindrique et une tête de soudage comportant une douille de centrage destinée à être introduite dans la pièce tubulaire à souder et une électrode de soudage montée rotative autour de l'axe de la douille, ce dispositif pouvant être facilement mis en place par des opérations commandées à distance et d'une façon telle que l'opération de soudage soit effectuée dans de très bonnes conditions.

Dans ce but, le dispositif comporte de plus un ensemble de liaison adaptable entre le moyen de fixation et la tête de soudage permettant des déplacements relatifs en translation de la tête de soudage par rapport au moyen de fixation, dans la direction de la perpendiculaire commune à l'axe de la partie cylindrique du moyen de fixation et à l'axe de la douille et en rotation, autour de deux axes perpendiculaires, dont l'un est parallèle à la direction de translation, lors de l'actionnement du vérin du moyen de fixation, la douille de la tête de soudage étant engagée dans le tube.

De manière préférentielle, l'ensemble de liaison adaptable entre le moyen de fixation et la tête de soudage comporte :

– un premier support solidaire du moyen de fixation présentant des moyens de guidage définissant un plan de glissement et une direction de glissement dirigée suivant la perpendiculaire commune à l'axe de la partie cylindrique du moyen de fixation et à l'axe de la douille de la tête de soudage,

– un coulisseau monté mobile dans la direction de glissement sur les moyens de guidage,

– un second support portant la tête de soudage montée sur le coulisseau et mobile en rotation par rapport au coulisseau autour d'un premier axe parallèle à la direction de glissement et autour d'un second axe parallèle au plan de glissement et perpendiculaire au premier,

– et des moyens de rappel dans la direction de glissement du coulisseau par rapport au premier support et du second support par rapport au coulisseau.

Afin de bien faire comprendre l'invention, on va maintenant décrire, à titre d'exemple un dispositif suivant l'invention utilisé pour le soudage de bouchons de fermeture à l'intérieur de chemises de remplacement de tubes d'un générateur de vapeur d'un réacteur nucléaire à eau sous pression.

– La figure 1 est une vue en coupe d'une partie d'une plaque tubulaire d'un générateur de vapeur d'un réacteur-nucléaire à eau sous pression ;

– la figure 2 est une vue schématique en perspective du dispositif de soudage suivant l'invention ;

– la figure 3 est une vue en coupe détaillée suivant 3-3 de la figure 2 ;

– la figure 4 est une vue en coupe suivant 4-4 de la figure 3 ;

– la figure 5 est une vue en coupe suivant 5-5 de la figure 3 ;

– la figure 6 est une vue en coupe suivant 6-6 de la figure 3 ;

– la figure 7 est une vue en coupe suivant 7-7 de la figure 3 ;

– la Fig. 8 est une vue en coupe suivant 8-8 de la Fig. 3 ;

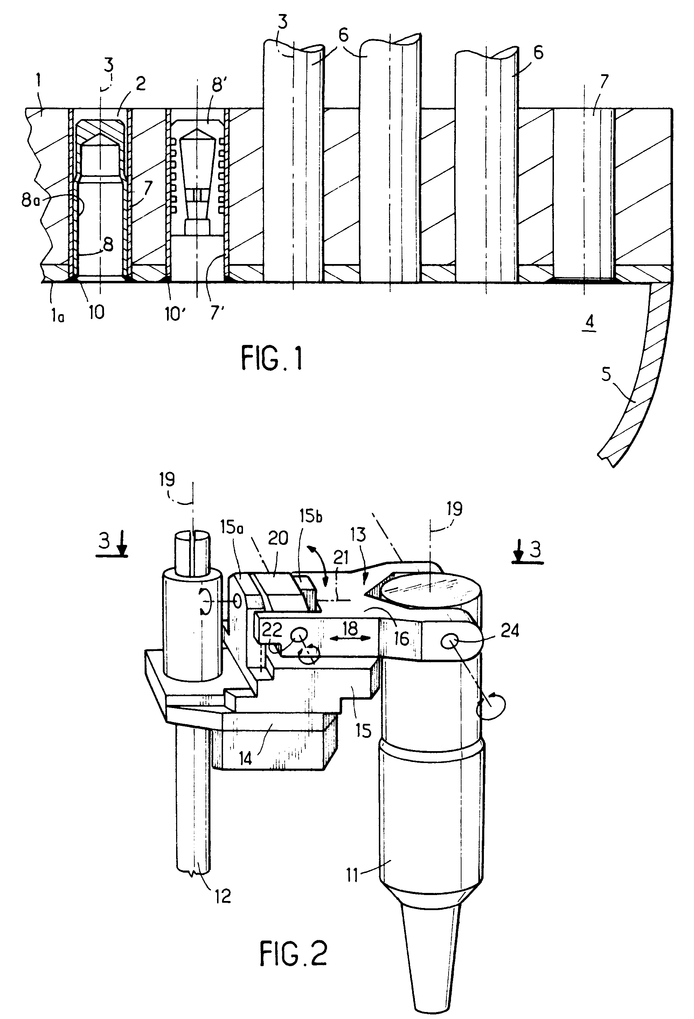

Sur la fig. 1, on voit une plaque tubulaire 1 d'un générateur de vapeur d'un réacteur nucléaire à eau sous pression qui comporte des trous de passage de tubes 2 traversant la plaque tubulaire sur toute son épaisseur. Les trous de passage 2 comportent des axes 3 sensiblement parallèles et débouchent sur la face d'entrée 1a de la plaque tubulaire 1, à l'intérieur de la boîte à eau 4 du générateur de vapeur délimitée sous la plaque tubulaire 1 par un fond bombé 5.

Dans chacun des trous de passage 2 est fixée une extrémité d'un tube 6 du générateur de vapeur. les tubes 6 sont fixés dans les trous de passage 2 par dudgeonnage et soudage.

Les tubes 6 sont en contact avec le fluide primaire du réacteur constitué par de l'eau sous pression, par l'intermédiaire de leur surface intérieure et avec le fluide secondaire du réacteur constitué par de l'eau d'alimentation dont on réalise la vaporisation, par l'intermédiaire de leur surface extérieure.

Les tubes 6 subissent en service les effets de la corrosion des fluides avec lesquels ils sont en contact. Cette corrosion est généralement plus forte dans la partie du tube sertie dans la plaque tubulaire et au voisinage de la face de sortie de cette plaque opposée à la face d'entrée 1a.

Il peut être nécessaire d'effectuer le prélèvement d'une longueur plus ou moins importante d'un tube 6, dans sa partie située à l'intérieur de la plaque tubulaire et au voisinage de la face de sortie, pour effectuer un examen et une expertise des dommages subis par le tube. La partie prélevée du tube 6 est remplacée par une chemise 7 de même diamètre qui est également fixée par sertissage à l'intérieur de la plaque tubulaire 1. Un bouchon 8, constitué par une pièce tubulaire fermée à l'une de ses extrémités dont le diamètre extérieur est inférieur au diamètre intérieur de la chemise 7, est introduit dans cette chemise et fixé en place par expansion diamétrale de la zone 8a. La fixation étanche du bouchon est complétée par une soudure circulaire 10 effectuée sur la partie d'extrémité du bouchon 8 mise en coïncidence avec la partie d'extrémité de la chemise 7 affleurant sur la face d'entrée 1a de la plaque tubulaire.

On a également représenté sur la figure 1, un bouchon mécanique 8' fixé dans une chemise 7' dont l'extrémité affleurant sur la face d'entrée 1a de la plaque tubulaire 1 est fixée sur cette plaque de manière étanche par une soudure circulaire 10'.

Lors de la remise en service du générateur de vapeur sur lequel on a prélevé un ou plusieurs tubes 6, les chemises et bouchons correspondants assurent une fermeture étanche du ou des trous de passage de tubes 2 à l'intérieur de la plaque tubulaire.

La soudure circulaire 10 effectuée à l'extrémité du bouchon 8 et de la chemise 7 est généralement réalisé sans métal d'apport par le procédé T.I.G. Il en est de même de la soudure 10' effectuée à l'extrémité de la chemise 7'.

Une tête de soudage T.I.G. orbitale doit être introduite dans la boîte à eau 4 par un trou d'homme et mise en place et commandée à distance.

Pour assurer une parfaite exécution et une très bonne qualité de la soudure 10, on doit effectuer une mise en place et un maintien de la tête de soudage dans une position parfaitement déterminée, de façon que l'extrémité de l'électrode de soudage se déplace dans un plan parfaitement parallèle à l'extrémité circulaire du bouchon 8 et de la chemise 7 dont on effectue la jonction par soudage.

Le dispositif suivant l'invention permet d'assurer une parfaite mise en place et un parfait guidage de l'électrode et, donc, une très bonne qualité de la soudure.

Sur la Fig. 2, on a représenté de façon schématique l'ensemble du dispositif de soudage qui comporte une tête de soudage 11, un moyen de fixation 12 et un ensemble de liaison adaptable 13 entre ces deux éléments.

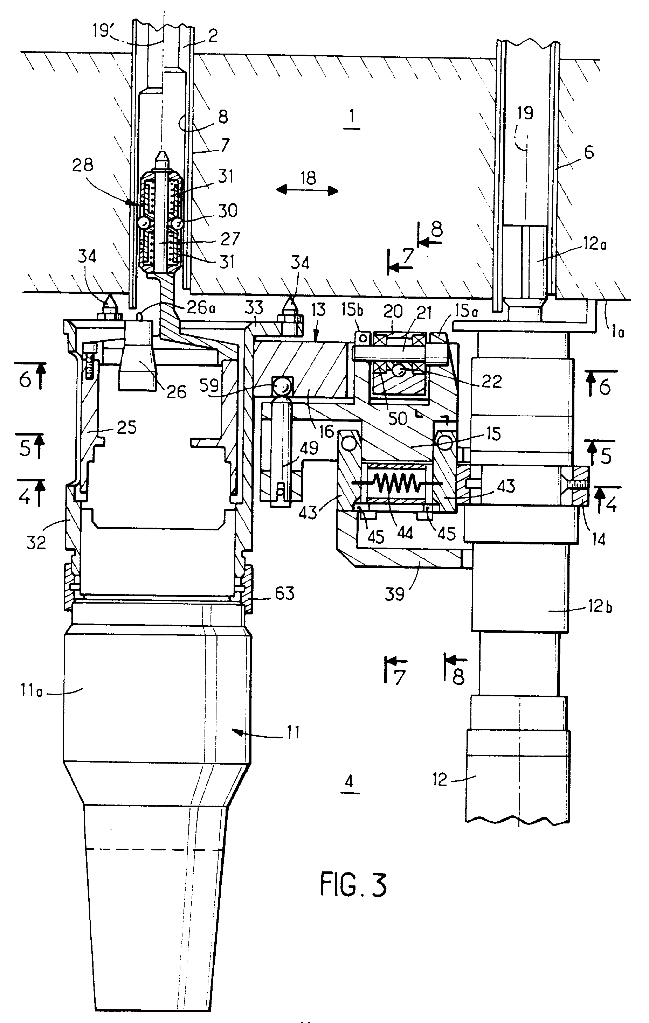

La tête de soudage 11 et le moyen de fixation 12 connus de l'art antérieur seront décrits en se référant à la Fig. 3.

L'ensemble de liaison 13 comporte un premier support 14 solidaire du moyen de fixation 12, un coulisseau 15 monté mobile en translation sur le support 14 et un second support 16 constitué par une chape portant la tête de soudage 11.

Le coulisseau 15 est monté mobile sur le support 14 dans un sens et dans l'autre et suivant la direction 18 correspondant à la perpendiculaire commune aux axes 19 et 19' du moyen de fixation 12 et de la tête de soudage 11 respectivement. La distance entre les axes 19 et 19' peut donc être modifiée et adaptée.

Le second support 16 est monté sur le coulisseau 15 par l'intermédiaire d'un ensemble d'éléments constituant l'équivalent d'un joint de cardan. cet ensemble comporte une noix 20 montée rotative sur le coulisseau 15, autour d'un axe 21 parallèle à la direction 18. L'axe 21 et la noix 20 sont montés entre deux parties 15a et 15b du coulisseau 15 saillant vers le haut. La chape 16 est montée mobile en rotation sur la noix 20 par l'intermédiaire d'un axe 22 perpendiculaire à l'axe 21 et parallèle au plan de glissement du coulisseau 15 sur le support 14.

La tête de soudage 11 est donc montée mobile en rotation par rapport au moyen de fixation 12 autour de deux axes perpendiculaires entre eux et parallèles au plan de glissement du coulisseau.

De plus, la tête de soudage 11 est montée rotative autour d'un axe 24 parallèle à l'axe 22 sur la chape 16.

Il est donc possible de régler aussi bien la distance que l'orientation relative des axes 19 et 19'.

Sur la Fig. 3, on voit le moyen de fixation 12 d'un type connu, conçu et réalisé par la Société FRAMATOME. Ce dispositif comporte une partie cylindrique de fixation 12a constituée, à la manière d'un mandrin, par des secteurs juxtaposés séparés par des fentes et un vérin d'actionnement 12b dont le corps peut être fixé sur une dispositif porteur connu en lui-même introduit dans la boîte à eau 4.

Le diamètre extérieur de la partie cylindrique 12a est supérieur au diamètre intérieur des tubes 6 du générateur de vapeur et cette partie 12a présente une certaine élasticité due à la présence de secteurs séparés par des fentes. Le vérin d'actionnement permet de déplacer les secteurs les uns vers les autres et vers l'intérieur, de façon à pouvoir introduire la partie 12a dans un tube. Lorsqu'on relâche la pression exercée sur le vérin 12b, les secteurs de la partie 12a reviennent vers l'extérieur par élasticité et assurent le serrage et la fixation du dispositif 12 dans un tube 6 comme représenté sur la Fig. 3. Il est à noter que le tube 6 peut être légèrement saillant ou légèrement rentrant par rapport à la face 1a de la plaque tubulaire.

La tête de soudage 11 représentée sur la Fig. 3 est d'un type connu et commercialisée sous l'appellation ROTOMATIG par la Société MECAZO. Cette tête de soudage comporte un corps 11a de forme généralement cylindrique recevant les alimentations et renfermant un moteur d'entraînement.

L'arbre de sortie du moteur est solidaire d'un équipage mobile 25 sur lequel est fixée l'électrode de soudage 26. L'équipage mobile 25 est solidaire d'un bout d'arbre 27 prolongeant l'équipage mobile 25 vers l'extérieur de la tête de soudage et constituant la partie centrale d'une douille à billes 28 dont les billes 30 sont repoussées vers l'extérieur par des ressorts 31. La douille 28 solidaire de l'équipage mobile 25 présente un diamètre nominal un peu inférieur au diamètre intérieur du bouchon 8 dont on effectue le soudage et constitue, dans ce bouchon, une douille de centrage de la tête de soudage, les billes 30 venant en appui sur la surface intérieure du bouchon 8, sous l'effet des ressorts 31.

On obtient ainsi un alignement parfait de l'axe 19′ de la tête de soudage avec l'axe du bouchon 8, lui-même confondu avec l'axe de la chemise 7 sur laquelle on fixe le bouchon 8 et avec l'axe du trou de passage 2 de la plaque tubulaire 1.

Le corps 11a de la tête de soudage 11 est prolongé, autour de l'équipage mobile 25, par un support tubulaire 32 par l'intermédiaire duquel la tête de soudage 11 est reliée à l'ensemble de liaison adaptable 13. Le support tubulaire 32 constitue, à sa partie supérieure, un flasque 33 sur lequel sont fixés des pions réglables 34 assurant la mise en place de la tête de soudage dans la direction de l'axe 19′ par mise en butée sur la face 1a de la plaque tubulaire 1.

On va maintenant décrire, en se référant aux Figs. 3 à 8, la structure détaillée de l'ensemble adaptable 13 de liaison entre le moyen de fixation 12 et la tête de soudage 11. Le support 14 est fixé de façon rigide sur le corps du vérin 12b.

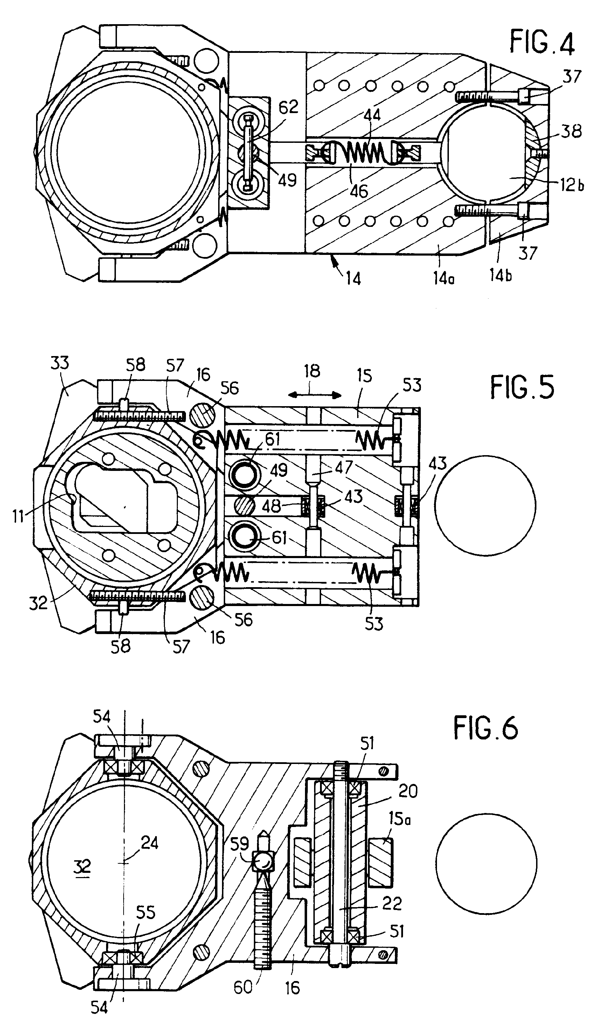

Comme il est visible sur la Fig.4, le support 14 comporte deux parties complémentaires 14a et 14b comportant chacune une échancrure sensiblement semi-circulaire disposée autour du corps du vérin 12b et assemblées entre elles par des vis 37. Une cale 38 est fixée grâce à une vis sur la partie 14b du support, à l'intérieur de l'échancrure semi-circulaire et assure le blocage en rotation du support 14 par rapport au corps du vérin. Comme il est visible sur les Fig. 3, 7 et 8, un couvercle 39 est fixé par des vis sur le support 14 et assure en particulier le support du bouton poussoir 40 de commande du moyen de fixation 12.

Le couvercle 39 assure également la protection des éléments de réglage de la course du dispositif de liaison 13.

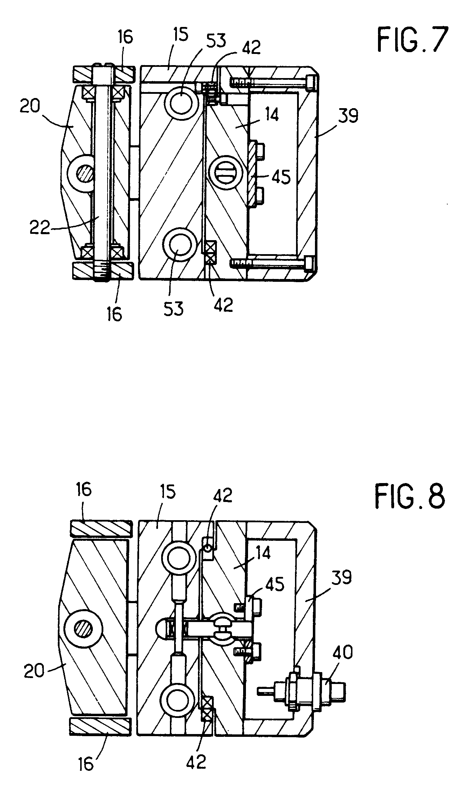

Comme il est visible sur les Fig. 7 et 8, le coulisseau 15 est monté mobile en translation sur le premier support 14, par l'intermédiaire de glissières à billes 42 comportant des rails dont la direction correspondant à la direction 18 représentée sur la Fig. 2 est parallèle à la perpendiculaire commune aux axes 19-19′ de la tête de soudage et du dispositif de fixation.

Comme il est visible sur les Fig. 3 et 4, le coulisseau 15 comporte un dispositif de rappel constitué par deux leviers 43 articulés à leur partie supérieure sur le coulisseau 15, rappelés l'un vers l'autre par un ressort hélicoïdal 44 et en appui sur deux faces de butée 45 du support 14.

Les leviers 43 et le ressort 44 sont montés à l'intérieur d'une rainure 46 ménagée dans le support 14.

Comme il est visible sur la Fig. 5, les leviers 43 sont montés pivotants autour d'axes 47 solidaires du coulisseau 15, par l'intermédiaire de roulements à aiguilles 48.

Le leviers 43 et le ressort 44 constituent un dispositif de rappel du coulisseau 15 dans la position représentée sur la Fig. 3. Si le coulisseau 15 s'écarte de cette position dans la direction 18, dans un sens ou dans l'autre, le dispositif de rappel a tendance à ramener le coulisseau dans la position d'équilibre représentée.

Le coulisseau 15 porte également un doigt coulissant à ressort 49 venant en appui par l'intermédiaire d'une bille 59 sur le second support 16 de la tête de soudage, assurant ainsi le maintien du second support 16 et la présence d'un jeu entre le second support 16 et le coulisseau 15.

Le doigt 49 vient en appui sur la bille 59 logée dans le support 16. Une vis à pointeau 60 permet de déplacer la bille 59 pour augmenter la tension du doigt 49 (figure 6). Le doigt 49 est rappelé par des ressorts 61, exerçant une traction sur les extrémités d'un axe 62 solidaire du doigt 49 à sa partie inférieure (figures 4 et 5).

Comme il est visible sur la Fig. 3, l'axe de rotation 21 de la noix 20 par rapport au coulisseau 15 est fixé sur les prolongements 15a et 15b du coulisseau 15. La noix 20 est montée rotative autour de l'axe 21 par l'intermédiaire de deux paliers à roulements 50.

Comme il est visible sur les Fig. 6 et 7, le second axe de rotation 22 de la tête de soudage est fixé sur le second support 16, entre deux branches parallèles de ce second support opposées aux branches supportant la tête de soudage. La noix 20 est montée rotative autour de cet 22 par l'intermédiaire de paliers à roulements 51.

Il en résulte que le second support 16 est monté à cardan par rapport au coulisseau 15 et peut ainsi accommoder des défauts de parallèlisme entre les axes 19 et 19'.

Sur la Fig. 5, on voit de plus que le support tubulaire 32 de la tête de soudage 11 est rappelé dans la direction 18 qui correspond à la direction de l'axe 21, par des ressorts 53 qui sont fixés chacun, d'une part, sur le coulisseau 15 et, d'autre part, sur la platine 33 solidaire du support tubulaire 32. Les ressorts 53 assurent le rappel de la tête de soudage dans une position où son axe 19' est sensiblement vertical.

Sur la figure 5, on voit en coupe deux butées 56 montées sur la chape 16 et deux vis de réglage 57 arrêtées par des petites vis 58 permettant de limiter le débattement de la tête de soudage 11 dans la chape 16.

La tête de soudage 11 est montée pivotante autour de l'axe 24, entre les deux branches de la chape 16, par l'intermédiaire de tourillons 54 ayant la direction de l'axe 24 et, donc, parallèles à l'axe 22. Les tourillons 54 sont solidaires des branches de la chape 16 et le support tubulaire 32 de la tête de soudage 11 est monté rotatif sur ces tourillons par l'intermédiaire de paliers à roulements 55.

Le fonctionnement du dispositif selon l'invention est le suivant.

En se reportant à la Fig. 3, on voit un trou de passage 2 d'un tube du faisceau dans lequel on a fixé une chemise 7.

Dans la partie de gauche du trou de passage 2, on a représenté un premier mode de réalisation, où la chemise 7 est légèrement saillante par rapport à la face 1a de la plaque tubulaire. On a fixé à l'intérieur de la chemise 7, par expansion diamétrale comme expliqué plus haut, un bouchon 8 dont la partie d'extrémité est mise coïncidence avec la partie d'extrémité de la chemise 7, légèrement en saillie par rapport à la face d'entrée 1a de la plaque tubulaire.

Dans la partie de droite du trou de passage 2, on a représenté un second mode de réalisation où la partie d'extrémité de la chemise 7 est légèrement en retrait par rapport à la face d'entrée 1a de la plaque tubulaire. La partie d'extrémité correspondante du bouchon 8 est mise en coïncidence avec la partie d'extrémité de la chemise, légèrement à l'intérieur du trou de passage 2.

Dans l'un et l'autre cas, le dispositif suivant l'invention permet de réaliser le soudage de la partie d'extrémité du bouchon 8 sur la partie d'extrémité de la chemise 7.

La position de l'électrode 26 par rapport à l'axe 19' de la tête de soudage est réglée préalablement de façon que la pointe 26a de l'électrode de tungstène se trouve à une distance de l'axe 19' correspondant sensiblement au demi-diamètre extérieur du bouchon 8 à souder. Le réglage de l'électrode est effectué par un dispositif connu.

Un écrou 63 permet de régler en hauteur la position de l'électrode 26 dans un sens et dans l'autre pour que la distance entre la pointe 26a de l'électrode et la zone circulaire du bouchon à souder, suivant la direction 19', ait une valeur faible et parfaitement déterminée, les plots 34 étant en butée contre la face 1a de la plaque tubulaire comme représenté sur la Fig. 3.

Il est bien évident en particulier que le réglage des plots 34 sera différent suivant que la zone à souder est légèrement en saillie ou légèrement en retrait par rapport à la face 1a de la plaque tubulaire.

Lorsque les réglages préalables ont été effectués, l'ensemble du dispositif de soudage est amené, par exemple en utilisant un porteur placé à l'intérieur de la boîte à eau 4 et commandé à distance, au voisinage du trou de passage 2 dans lequel on effectue le soudage du bouchon 8. L'axe 19' de la tête de soudage est placé sensiblement dans l'alignement de l'axe du trou de passage 2 est la douille à billes 28 est engagée dans le tube jusqu'au moment où les plots 34 viennent en appui sur la face 1a de la plaque tubulaire. Simultanément, la partie cylindrique de fixation 12a du dispositif 12 est engagée dans un tube 6 situé à proximité du trou de passage 2 et à quelques positions de distance dans le réseau.

De façon pratique, on a conçu un dispositif de soudage dont la fixation est réalisée dans un tube situé à cinq positions du trou de passage dans lequel on réalise le soudage.

Pour réaliser l'engagement de la partie 12a, le bouton 14 permettant l'actionnement du vérin 12b est maintenu enclenché, si bien que la partie 12a est dans sa position rétractée permettant l'introduction dans le tube 6.

Lorsque la mise en place de la tête de soudage est assurée, on relâche le bouton poussoir 40, par action à distance. Le dispositif de fixation 12 se met en place par rapport à la tête de soudage 11 dont la position et fixée par la douille à billes 28 et par les plots 34 en appui sur la face 1a de la plaque tubulaire.

Dans le cas où la distance entre l'axe du trou de passage du tube 6 et l'axe du trou de passage 2 dans lequel on fixe le bouchon 8 n'est pas exactement égale à la distance nominale prévue de cet entr'axe, l'ensemble de liaison adaptable 13 permet de compenser ce défaut de dimensionnement, par déplacement du coulisseau 15 par rapport au support 14, dans la direction 18, dans un sens ou dans l'autre.

De même, un léger défaut de parallèlisme entre l'axe du trou de passage du tube 6 et l'axe du trou de passage 2 peut être compensé par rotation du second support 16 par rapport au coulisseau 15, autour de l'axe 21 et des axes 22 et 24.

La mise en place est donc réalisée de façon très sûre et très rapide et la pointe 26a de l'électrode 26 se déplace, lors de la mise en rotation de l'équipage 25 de la tête de soudage 11, dans un plan parfaitement parallèle à l'extrémité du bouchon à souder et à une distance parfaitement constante de cette extrémité.

La mise en place et le maintien de la tête de soudage en position correcte sont assurés de ma nière rapide et totalement automatisables, quels que soient les défauts de positionnement et d'alignement des trous de passage de la plaque tubulaire.

L'invention ne se limite pas au mode de réalisation qui a été décrit.

C'est ainsi qu'on peut imaginer un montage différent du second support de la tête de soudage, par rapport au coulisseau, à partir du moment où ce montage permet d'absorber un désalignement quelconque des axes du moyen de fixation et de la machine de soudage.

De même, les dispositifs de rappel du coulisseau et de la tête de soudage peuvent être réalisés d'une manière différente de celle qui a été décrite.

Le second support de la tête de soudage peut être réalisé sous une forme différente d'une chape et la tête de soudage peut être fixée de façon rigide sur ce second support.

L'invention est applicable au cas du soudage de pièces tubulaires différentes de bouchons de fermeture de manchettes de remplacement de tubes, à l'intérieur d'un alésage d'une plaque tubulaire d'un générateur de vapeur.

## Revendications

1. Dispositif de soudage d'une partie d'extrémité de forme circulaire, d'une pièce tubulaire (8) fixée à l'intérieur d'un alésage (2) débouchant sur une face d'une plaque (1), telle qu'une plaque tubulaire de générateur de vapeur, percée d'un ensemble de trous de passage de tube (6) disposés suivant un réseau régulier, comportant :
   – un moyen de fixation (12) présentant une partie cylindrique (12a) destinée à être introduite dans un tube (6) du réseau et un vérin (12b) d'actionnement de la partie cylindrique (12a),
   – une tête de soudage (11) comportant une douille de centrage (28) destinée à être introduite dans la pièce tubulaire (8) à souder et une électrode de soudage (26) montée rotative autour de l'axe de la douille (28),
   – un ensemble de liaison (13) reliant le moyen de fixation (12) et la tête de soudage (11) caractérisé par le fait que l'ensemble de liaison (13) comporte des moyens permettant des déplacements relatifs en translation de la tête de soudage (11) par rapport au moyen de fixation (12), dans la direction de la perpendiculaire commune à l'axe de la partie cylindrique (12a) du moyen de fixation (12) et à l'axe de la douille (28) et en rotation, autour de deux axes perpendiculaires (21, 22) dont l'un est parallèle à la direction (18) de translation, lors de l'actionnement du vérin (12b) du moyen de fixation (12), la douille (28) de la tête de soudage (11) étant engagée dans le tube (6).

2. Dispositif de soudage suivant la revendication 1, caractérisé par le fait que l'ensemble de fixation (12) de la tête de soudage (11) comporte :
   – un premier support (14) solidaire du moyen de fixation (12) présentant des moyens de guidage (42) définissant un plan de glissement et une direction de glissement (18) dirigée suivant la perpendiculaire commune à l'axe de la partie cylindrique (12a) du moyen de fixation (12) et à l'axe de la douille (28) de la tête de soudage (11),
   – un coulisseau (15) monté mobile dans la direction de glissement (18) sur les moyens de guidage (42),
   – un second support (16) portant la tête de soudage montée sur le coulisseau (15) et mobile en rotation par rapport au coulisseau (15) autour d'un premier axe (21) parallèle à la direction de glissement (18) et autour d'un second axe (22) parallèle au plan de glissement et perpendiculaire au premier axe (21),
   – et des moyens de rappel (43, 44, 53) du coulisseau (15) par rapport au premier support (14) et du second support (16) par rapport au coulisseau (15).

3. Dispositif de soudage suivant la revendication 2, caractérisé par le fait que le second support (16) est constitué sous la forme d'une chape ayant deux branches entre lesquelles la tête de soudage est montée pivotante autour du second axe de rotation (22), par l'intermédiaire de tourillons (54).

4. Dispositif de soudage suivant l'une quelconque des revendications 2 et 3, caractérisé par le fait que les moyens de rappel (43, 44) du coulisseau (15) par rapport au premier support (14) sont constitués par deux leviers (43) montés articulés sur le coulisseau (15) autour d'axes parallèles et rappelés l'un vers l'autre par un ressort hélicoïdal (44), les leviers étant en appui sur des faces d'appui (45) du support (14).

5. Dispositif de soudage suivant l'une quelconque des revendications 2 à 4, caractérisé par le fait qu'un doigt coulissant à ressort (49) est monté sur le coulisseau (15) et comporte une extrémité sur laquelle repose le second support (16), le doigt (49) assurant le maintien du second support par rapport au coulisseau et le maintien d'un jeu entre le coulisseau (15) et le second support (16).

6. Dispositif de soudage suivant l'une quelconque des revendications 2 à 5, caractérisé par le fait que les moyens de rappel du second support (16) par rapport au coulisseau (15) sont constitués par des ressorts hélicoïdaux fixés d'une part sur un support (32) solidaire de la tête de soudage (11) et, d'autre part, au coulisseau (15).

**Patentansprüche**

1. Vorrichtung zum Schweißen eines kreisförmigen Endbereiches eines rohrförmigen Teils (8), das im Inneren einer Ausnehmung (2) befestigt ist, die auf einer Seite einer Platte (1) mündet, wie eine rohrförmige Platte eines Dampferzeugers, die von einer Durchgangslochanordnung von Rohren (6) durchbrochen ist, die gemäß einem regelmäßigen Netz angeordnet sind, die aufweist:

– eine Befestigungseinrichtung (12), die einen zylindrischen Bereich (12a) aufweist, der dazu dient, in ein Rohr (6) des Netzes eingeführt zu werden, und einen Betätigungsstelltrieb (12b) des zylindrischen Bereichs (12a),

– einen Schweißkopf (11), der einen Zentrierungsring (28) aufweist, der dazu dient, in das rohrförmige zu schweißende Teil (8) eingeführt zu werden, und eine Schweißelektrode (26) aufweist, die drehbar um die Achse des Zentrierungsrings (28) angeordnet ist,

– eine Verbindungsanordnung (13), die die Befestigungseinrichtung (12) und den Schweißkopf (11) verbindet,

**dadurch gekennzeichnet,** daß die Verbindungsanordnung (13) Einrichtungen aufweist, die relative Translationsbewegungen des Schweißkopfes (11) bezüglich der Befestigungseinrichtung (12) erlauben, in die Richtung der gemeinsamen Senkrechten zur Achse des zylindrischen Bereichs (12a) der Befestigungseinrichtung (12) und der Achse des Rings (28) und eine Drehbewegung erlaubt, um zwei senkrechte Achsen (21,22), von denen eine parallel zur Translationsrichtung (18) ist, bei Betrieb des Stelltriebs (12b) der Befestigungseinrichtung (12), wobei der Ring (28) des Schweißkopfes (11) in das Rohr (6) eingreift.

2. Schweißvorrichtung nach Anspruch 1, **dadurch gekennzeichnet,** daß die Befestigungsanordnung (12) des Schweißkopfes (11) aufweist:

– eine erste Stützte (14), die mit der Befestigungseinrichtung verbunden ist, die Führungseinrichtungen (42) aufweist, die eine Gleitebene und eine Gleitrichtung (18) definieren, die gemäß der gemeinsamen Senkrechten zur Achse des zylindrischen Bereichs (12a) der Befestigungseinrichtung (12) und zur Achse des Rings (28) des Schweißkopfes (11) ausgerichtet ist,

– einen Schlitten (15), der beweglich in der Gleitrichtung (18) auf den Führungseinrichtungen (42) angebracht ist,

– einer zweiten Stütze (16), die den auf dem Schlitten (15) angebrachten Schweißkopf trägt und bezüglich des Gleitstücks (15) um eine erste Achse (21) drehbeweglich ist, die parallel ist zur Gleitrichtung (18) und um eine zweite Achse (22) drehbeweglich ist, die parallel zur Gleitebene und senkrecht zur ersten Achse (21) verläuft,

– und Rückholeinrichtungen (42,44,53) des Schlittens (15) bezüglich der ersten Stütze (14) und der zweiten Stütze (16) bezüglich des Schlittens (15).

3. Schweißvorrichtung nach Anspruch 2, **dadurch gekennzeichnet,** daß die zweite Stütze (16) in Form einer Gabel gebildet ist, die zwei Arme aufweist, zwischen denen der Schweißkopf drehbeweglich um die zweite Drehachse (22) über Lagerzapfen (54) angeordnet ist.

4. Schweißvorrichtung nach Anspruch 2 oder 3, **dadurch gekennzeichnet,** daß die Rückholeinrichtungen (43, 44) des Schlittens (15) bezüglich der ersten Stütze (14) gebildet werden aus zwei Hebeln (43), die gelenkig an dem Schlitten (15) um parallele Achsen angeordnet sind, und miteinander verspannt sind durch eine Schraubenfeder (44), wobei die Hebel in Anlage sind auf Anlageflächen (45) der Stütze (14).

5. Schweißvorrichtung nach einem der Ansprüche 2 bis 4, **dadurch gekennzeichnet,** daß ein Gleitfederfinger (49) an dem Schlitten (15) angeordnet ist, und ein Ende aufweist, auf dem die zweite Stütze (16) ruht, wobei der Finger (49) den Halt der zweiten Stütze bezüglich des Schlittens und das Beibehalten eines Spiels zwischen dem Schlitten (15) und der zweiten Stütze (16) sicherstellt.

6. Schweißvorrichtung nach einem der Ansprüche 2 bis 5, **dadurch gekennzeichnet,** daß die Rückholeinrichtungen der zweiten Stütze (16) bezüglich des Schlittens (15) gebildet sind aus Schraubenfedern, die einerseits an einer Stütze (32) befestigt sind, die mit dem Schweißkopf (11) verbunden ist, und andererseits mit dem Schlitten (15) verbunden sind.

**Claims**

1. Device for welding a circular end part of a tubular member (8) secured inside a bore (2) opening onto a face of a plate (1), such as a steam-generator tube plate having a set of tube (6) passage holes arranged according to a regular network, comprising:

– fixing means (12) having a cylindrical part (12a) adapted to be introduced into a tube (6) of the network and a jack (12b) for actuating the cylindrical part (12a),

– a welding head (11) comprising a centering bush (28) adapted to be introduced into the tubular member (8) to be welded, and a welding electrode (26) rotatably mounted about the axis of the bush (28),

   – a connecting assembly (13) between the fixing means (12) and the welding head (11),

characterised in that the connecting assembly comprises means allowing relative translational movements of the welding head (11) in relation to the fixing means (12) in the direction of the perpendicular common to the axis of the cylindrical part (12a) of the fixing means (12) and to the axis of the bush (28) and relative rotational movements about two perpendicular axes (21, 22), one of which is parallel to the direction (18) of translational movement, upon actuation of the jack (12b) of the fixing means, the bush (28) of the welding head (11) being engaged in the tube.

2. Welding device according to claim 1, characterised in-that the fixing assembly (12) of the welding head (11) comprises:

   – a first support (14) secured to the fixing means (12) and having guide means (42) defining a sliding plane and a sliding direction (18) oriented along the perpendicular common to the axis of the cylindrical part (12a) of the fixing means (12) and to the axis of the bush (28) of the welding head (11),

   – a slide block (15) mounted on the guide means (42) and movable in the sliding direction (18),

   – a second support (16) carrying the welding head, mounted on the slide block (15) and rotationally movable relative to the slide block (15) about a first axis (21) parallel to the sliding direction (18) and about a second axis (22) parallel to the sliding plane and perpendicular to the first axis (21),

   – and means (43, 44, 53) for the return of the slide block (15) in relation to the first support (14) and of the second support (16) in relation to the slide block (15).

3. Welding device according to claim 2, characterised in that the second support (16) takes the form of a yoke having two branches, between which the welding head is mounted pivotably about the second axis of rotation (22), by means of journals (54).

4. Welding device according to either one of claims 2 and 3, characterised in that the means (43, 44) for the return of the slide block (15) in relation to the first support (14) consist of two levers (43) mounted in an articulated manner on the slide block (15) about parallel axes and returned towards one another by means of a helical spring (44), the levers resting against bearing faces (45) of the support (14).

5. Welding device according to any one of claims 2 to 4, characterised in that a sliding spring finger (49) is mounted on the slide block (15) and has an end on which the second support (16) rests, the finger (49) ensuring that the second support is retained relative to the slide block and that a play is maintained between the slide block (15) and the second support (16).

6. Welding device according to any one of claims 2 to 5, characterised in that the means for the return of the second support (16) in relation to the slide block (15) consist of helical springs fixed, on the one hand, to a support (32) secured to the welding head (11) and, on the other hand, to the slide block (15).

FIG.1

FIG.2

FIG. 3

EP 0 321 317 B1

FIG.4

FIG.5

FIG.6

12

FIG.7

FIG.8